**Europäisches Patentamt**

**European Patent Office**

**Office européen des brevets**

(11) Veröffentlichungsnummer : **0 199 319**
**B1**

(12) **EUROPÄISCHE PATENTSCHRIFT**

(45) Veröffentlichungstag der Patentschrift :
28.06.89

(21) Anmeldenummer : 86105459.1

(22) Anmeldetag : 19.04.86

(51) Int. Cl.⁴ : **F 02 C 7/24, F 16 L 59/00,**
**F 28 F 9/00**

(54) **Einrichtung zur Halterung hohen Temperaturen ausgesetzter Bauteile an thermisch isolierten Gehäusen.**

(30) Priorität : 20.04.85 DE 3514378

(43) Veröffentlichungstag der Anmeldung :
29.10.86 Patentblatt 86/44

(45) Bekanntmachung des Hinweises auf die Patenterteilung : 28.06.89 Patentblatt 89/26

(84) Benannte Vertragsstaaten :
BE CH FR GB IT LI NL SE

(56) Entgegenhaltungen :
EP–A– 0 061 656
DE–C– 879 628
GB–A– 736 267
GB–A– 831 808
US–A– 3 263 424
US–A– 3 366 373

(73) Patentinhaber : **MTU MOTOREN- UND TURBINEN-
UNION MÜNCHEN GMBH**
**Dachauer Strasse 665 Postfach 50 06 40**
**D-8000 München 50 (DE)**

(72) Erfinder : **Wöhrl, Bernhard, Dr.**
**Planegger Strasse 21**
**D-8035 Gauting (DE)**

## Beschreibung

Die Erfindung bezieht sich auf eine Einrichtung nach dem Oberbegriff des Patentanspruchs 1.

Zum Beispiel bei Abgasgehäusen von Turbomaschinen oder Wärmetauschern wird häufig die tragende Struktur gegen das innen geführte Heißgas mit wärmedämmenden Schichten abgedeckt. Dabei soll die äußere Gehäusewand eine für die umgebenden Teile verträgliche Temperatur annehmen. Oft ist es erforderlich, im Innenraum des isolierten Gehäuses Einbauten wie Dichtungselemente, Strömungsleitbleche u. ä. anzubringen. Dabei dürfen die Gehäuseisolierschichten nicht durchbrochen oder als die Einbauten tragendes Element verwendet werden, um einerseits die angestrebte thermische Isolierwirkung nicht zu gefährden; andererseits eignet sich die vorhandene Gehäuseisolierung oftmals nicht zur Befestigung von Einbauten, weil die festigkeitsmäßigen Eigenschaften der Isolierschichten unzureichend sind bzw. kein mechanisch geeigneter Halt der Einbauten an diesen Isolierschichten möglich ist.

Hierbei wären ferner z. B. als Ursache häufig auftretender instationärer Betriebszustände von thermischen Turbomaschinen, z. B. Gasturbinentriebwerken, auftretende, vergleichsweise extrem unterschiedliche Temperaturbelastungen der Bauteile zu berücksichtigen; dies führt wiederum zu vergleichsweise großen thermische Dehnungsunterschieden der Bauteile, wodurch die beabsichtigte Bauteilhalterung an thermischen Isolierschichten zusätzlich erschwert wird.

Der Erfindung liegt die Aufgabe zugrunde, eine auftretende Wärmedehnungen kompensierende und betriebsstabile Bauteilhalterung an thermisch isolierten Gehäusen zu schaffen, ohne dabei eine unzulässige Verminderung der thermischen Isolierwirkung oder eine mechanische Beeinträchtigung der Isolationsschicht in Kauf nehmen zu müssen.

Die gestellte Aufgabe ist mit den Merkmalen des Kennzeichnungsteils des Patentanspruchs 1 erfindungsgemäß gelöst.

Auf diese Weise wird also eine mechanisch/thermisch stabile Bauteilhalterung geschaffen. Die Ausbildung des Isolierkörpers ermöglicht in Verbindung mit der Zuordnung der seitlichen Platten bzw. Bleche nicht nur eine betriebssichere Verankerung am Gehäuse einerseits sondern auch eine entsprechende betriebssichere Verankerung des Bauteils über den Isolierkörper am Gehäuse; es erfolgt dabei keine Beeinträchtigung der Isolierwirkung im betreffenden Gehäusewandbereich; thermische Bauteildehnungen werden einwandfrei kompensiert, ohne die Halterung, die Isolierwirkung sowie das betreffende Gehäuse mechanisch und thermisch zu gefährden.

Vorteilhafte Ausgestaltungen der Erfindung ergeben sich aus den Merkmalen der Patentansprüche 2 bis 13.

Anhand der Zeichnungen ist die Erfindung beispielsweise weiter erläutert; es zeigen:

Fig. 1 die Bauteilhalterungs- und Befestigungseinrichtung im Wege eines Gehäuseteillängsschnitts,

Fig. 2 den an einem Ausschnitt aus Fig. 1 verdeutlichten Kurvenzug, welcher den erfindungsgemäß auch im örtlichen Bereich der Einrichtung einhaltbaren, steilen Temperaturgradienten — Heißgasseite zur Gehäusewand — repräsentiert und

Fig. 3 die gehäuseseitige Anwendung zweier erfindungsgemäßer Einrichtungen, bei denen das jeweilige Bauteil als Träger einer bewegungskompensatorischen Bürstendichtung ausgebildet ist, und zwar im Wege einer schematisch wiedergegebenen Profilwärmetauscherstirnansicht unter Zuordnung einer längs geschnittenen Gehäuseberandungssektion in Nachbarschaft des Matrixumlenkbereiches.

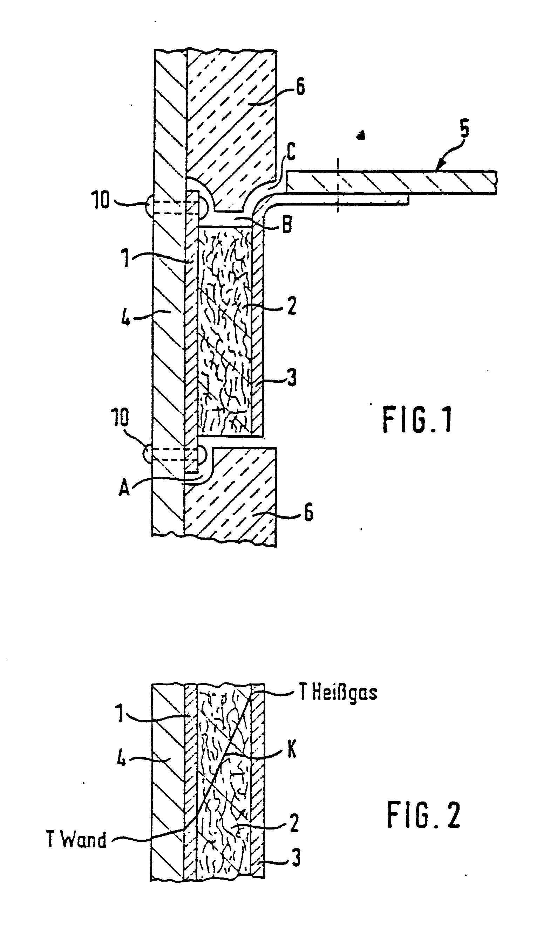

Fig. 1 zeigt eine Einrichtung zur Halterung bzw. Befestigung eines, einer vergleichsweise hohen Temperatur eines Mediums, z. B. Heißgas ausgesetzten Bauteils 5 an einem mit einer Wärmeisolierung 6 gegenüber diesem Medium ausgebildeten Gehäusewand 4. Zur Lösung des in Rede stehenden Problems soll zum einen eine an der Gehäusewand 4 von deren thermischer Isolierung 6 nicht ausgekleidete Sektion im wesentlichen durch einen gesonderten, thermoelastisch flexiblen Isolierkörper 2 ausgefüllt sein; zum anderen soll der Isolierkörper 2 beidseitig in Platten 1, 3, d. h., metallische Platten eingebettet sein, von denen die eine, 1, unmittelbar an der Gehäusewand 4 befestigt sein soll und die andere Platte 3, als Mediumskanalwandsektion, zugleich Halterungsmittel für das Bauteil 5 sein soll.

In bevorzugter Ausführung soll der flexible Isolierkörper 2 aus einer Metall-Filz-Schicht gefertigt sein. Je nach aufzunehmenden Kräften und zulässigen Relativbewegungen kann der betreffende Metallfilz in unterschiedlichen Dicken und relativen Dichten verwendet werden.

Vorzugsweise sollen ferner beide Platten 1, 3 an die Metall-Filz-Schicht angelötet sein. Hierbei wäre darauf zu achten, daß der metallische Anteil der Metall-Filz-Schicht genügend groß bemessen ist und andererseits hinsichtlich der Wahl des Plattenwerkstoffes die notwendigen Voraussetzungen für eine einwandfreie Verlötung geschaffen werden.

Die eine Platte 1 kann durch Löten, Schweißen, Verschrauben, Vernieten, z. B. Niete 10 (Fig. 10) oder dergleichen an der Gehäusewand 4 befestigt werden.

Zum Teil aus Einbau-, aber auch aus thermischen Gründen erweist es sich ferner als zweckmäßig, wenn die Platten 1, 3, der Isolierkörper 2 bzw. die Metall-Filz-Schicht sowie das Bauteil 5 mit geeigneten Abständen A, B, C zur übrigen Gehäusewandisolierung 6 angeordnet sind.

Vorteilhafterweise ermöglicht die Einrichtung im Rahmen des angegebenen Aufbaus gemäß Temperaturverlauf K (T Heißgas/T Wand) die Einhaltung eines steilen Temperaturgradienten vom durch das verhältnismäßig heiße Medium, z. B. Heißgas, beaufschlagten Einbauteil bzw. der Platte 3 zur vergleichsweise kühlen Gehäusewand 4 hin.

Gemäß Fig. 1 ist ferner die andere Platte 3, als Halterungsmittel für das Bauteil 5, an einem Ende seitlich gegenüber der Gehäusewand 4 abgebogen ausgebildet.

Die zuvor genannte andere Platte könnte zum Zwecke der Bauteilhalterung oder Wandversteifung auch mit mehreren seitlichen Abbiegungen bzw. seitlich auskragenden Tragblechen ausgestattet sein.

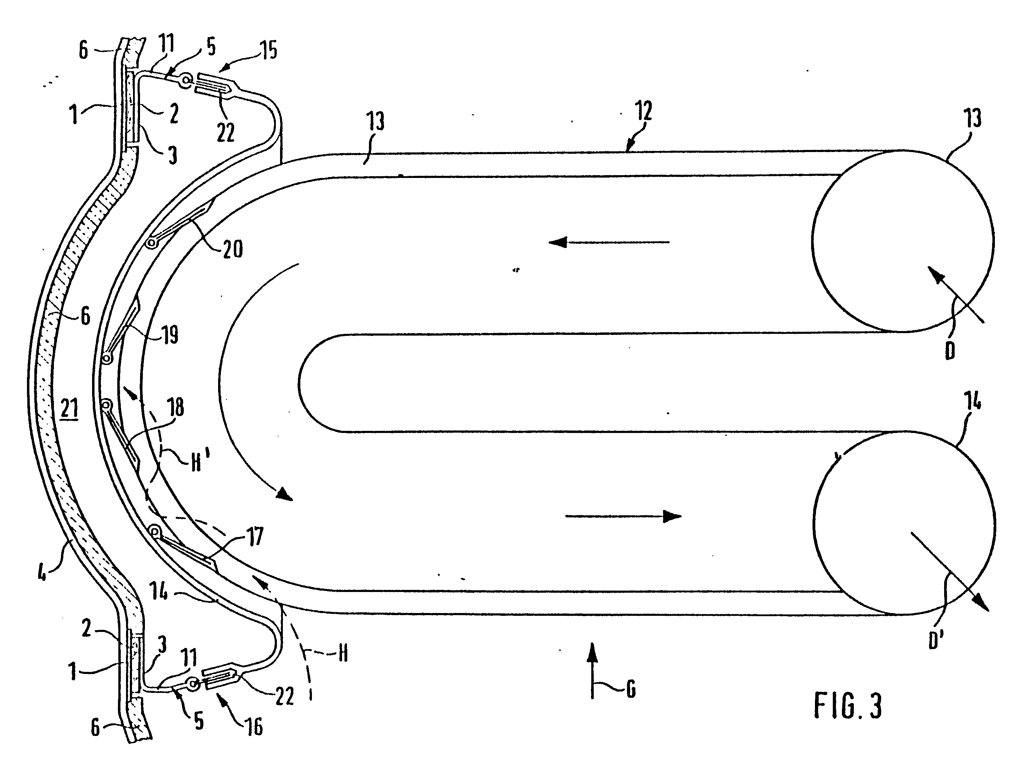

Darüber hinaus könnten mehrere Einrichtungen dieser Art, je nach Bedarf, örtlich unterschiedlich verteilt an der Gehäusewand befestigt sein (s. h. auch Fig. 3).

Bei dem jeweils zu verwendenden Bauteilen kann es sich z. B. um aerodynamische Schikanen, Strömungsumlenk- oder -leitbleche, Dichtungsträger 11 (Fig. 3), Stützschaufeln oder Leitschaufeln oder dergleichen handeln.

Wie noch zu Fig. 3 ausführlicher behandelt, kann die mit der Isolierung 6 ausgekleidete Gehäusewand 4 die Außengehäusewand eines Wärmetauschers sein, wobei die Isolierung 6 sowie die andere, jeweils als Bauteilhalterungsmittel ausgebildete Platte 3 von Heißgasen umströmbar ist, oder — wie in Fig. 3 gezeigt — im Heißgasan- oder Abströmgebiet liegen kann. Fig. 3 veranschaulicht einen Profilrohr-Wärmetauscher in Kreuz-Gegenstrom-Bauweise, bei dem die von Heißgasen G umströmbare Matrix 12 ein- und austrittsseitig an voneinander getrennte, zylindrische Druckluftführungen 13, 14 angeschlossen ist und aus von diesen seitlich auskragenden, im wesentlichen U-förmigen Matrixrohrbügeln, z. B. 13, besteht. Dabei wird die über die Heißgase G aufzuheizende Druckluft gemäß Pfeil D der oberen zylindrischen Druckluftführung 13 zugeführt, durchströmt dann gemäß der aufgezeigten Pfeilrichtungsfolge die Matrix 12 und wird dann, im aufgeheizten Zustande, gemäß Pfeilrichtung D' aus der unteren zylindrischen Druckluftführung 14 einem geeigneten Verbraucher, z. B. der Brennkammer eines Gasturbinentriebwerkes, zugeführt. Dabei ist ferner hier ein z. B. die Matrix im äußeren Umlenkungsbereich umrandendes Wandelement 14 als Matrixteilabdeckschale ausgebildet, die betrieblichen, insbesondere thermisch bedingten Differenzbewegungen unterworfen ist; dabei sollen bewegungskompensatorische Heißgasabsperrdichtungen 15, 16 zwischen dem Wandelement 14 und dem thermisch isolierten, die Heißgase führenden Außengehäuse 4 vorgesehen sein. Unter Verwendung gleicher Bezugszeichen nach Fig. 1 und 2 verkörpert Fig. 3 also die Anwendung der Einrichtung an stromauf- und stromabwärtiger Stelle dieses Außengehäuses 4, wobei die Bauteile 5 Dichtungsträger 11 der bewegungskompensatorischen Heißgasabsperrdichtungen 15 und 16 zwischen dem Außengehäuse 4 bzw. einer außengehäuseseitigen Berandungssektion im Matrixbogenbereich und dem benachbarten Wandelement 14 sind. Letzteres kann wiederum im Hinblick auf Differenzbewegungen der Matrix 12 bewegungskompensatorisch unter Bezug auf den äußeren umlenkungsseitigen Rand der Matrix angeordnet sein, was durch am Wandelement 14 befestigte Bürstendichtungen 17, 18, 19, 20 verdeutlicht ist, die hier also den äußeren Bogenbereich der Rohrbügel 13 abdichtend übergreifen. Die Absperrdichtungen 16 bzw. 15 verhindern also zunächst eine für den Wärmetauschprozeß ungenutzte Strömung von Heißgasen in den Zwischenraum 21 — zwischen Wandelement 14 und Gehäuse 4. Die Heißgase werden im seitlichen Gehäusebereich gemäß Pfeil H also in Richtung auf den bogenförmigen, randständigen Matrixbereich abgelenkt. In Kombination mit dem schalenartigen Wandelement 14 mit den übrigen Bürstendichtungen 17, 18, 19, 20 ergibt sich dann weiter eine schlangenlinienförmige Zwangsführung H' des randständigen Heißgasströmanteils, und damit auch im äußeren Matrixumlenkungsbereich ein akzeptabler Kreuz-Gegenstrom-Wärmetauschprozeß.

Die zuvor erwähnten Heißgasabsperrdichtungen 15, 16 sind hier z. B. ebenfalls Bürstendichtungen, die einerseits an den Bauteilen 5 befestigt sind und andererseits abdichtend in Fugen 22 der gabelförmigen Enden des Wandelements 14 eingreifen.

Im übrigen eignet sich die erfindungsgemäße Einrichtung auch für den Einsatz bei heißgasführenden, thermisch isolierten Gehäusestrukturen von Gasturbinentriebwerken oder Strahltriebwerken.

## Patentansprüche

1. Einrichtung zur wärmeisolierten Halterung eines Bauteils (5) an einer Gehäusewand (4) eines zur Heißgasführung ausgebildeten Strömungskanals (21) mit einem zwischen inneren und äußeren Metallplatten (1, 3) angeordneten, aus einem elastischen Werkstoff gefertigten Isolierkörper (2), gekennzeichnet durch folgende Merkmale :

Der Isolierkörper (2) besteht aus einer Metall-Filz-Schicht ;

der Isolierkörper (2) füllt eine in einer Wärmeisolierung (6) der Gehäusewand (4) angeordnete Aussparung aus ;

die innere Platte (1) ist unmittelbar an der Gehäusewand (4), das Bauteil (5) ausschließlich an der äußeren Platte (3) befestigt.

2. Einrichtung nach Anspruch 1, dadurch gekennzeichnet, daß die innere und äußere Platte (1, 3) an die Metall-Filz-Schicht (2) angelötet sind.

3. Einrichtung nach Anspruch 1 oder 2, dadurch gekennzeichnet, daß die innere Platte (1) durch Löten, Schweißen, Verschrauben, Vernieten oder dergleichen an der Gehäusewand (4) befestigt ist.

4. Einrichtung nach einem der Ansprüche 1 bis 3, dadurch gekennzeichnet, daß innere und äußere Platte (1, 3), der Isolierkörper (2) und das Bauteil (5) mit Abständen (A, B, C) zur Wärmeisolierung (6) der Gehäusewand (4) angeordnet sind.

5. Einrichtung nach einem der Ansprüche 1 bis 4, dadurch gekennzeichnet, daß die äußere Platte (3) einen an mindestens einem Ende seitlich gegenüber der Gehäusewand (4) abgebogenen Bauteilhalter ausbildet.

6. Einrichtung nach einem der Ansprüche 1 bis 5, dadurch gekennzeichnet, daß die äußere Platte mit mehreren seitlichen Abbiegungen bzw. seitlich auskragenden Tragblechen ausgestattet ist.

7. Einrichtung nach einem oder mehreren der Ansprüche 1 bis 6, dadurch gekennzeichnet, daß die Gehäusewand (4) eine Heißgas (G) über die Matrix (12) eines Kreuz-Gegenstrom-Wärmetauschers führende Wand ist, und daß das Bauteil (5) Träger der Borsten einer bewegungskompensatorischen Bürstendichtung (16) in dem Strömungskanal (21), zwischen der thermisch isolierten Gehäusewand (4) und einer die Matrix (12) im U-förmigen Umlenkbereich abdeckenden Schale (14), ist.

## Claims

1. Device for the thermally insulated support of a construction part (5) on a housing wall (4) of a flow duct (21) designed to convey hot gas, having an insulating body (2) made of a resilient material arranged between inner and outer metal plates (1, 3), characterised by the following features :

the insulating body (2) is made of a metal-felt-layer ;

the insulating body (2) fills a recess arranged in thermal insulation (6) of the housing wall (4) ;

the inner plate (1) is secured directly on the housing wall (4), the construction part (5) exclusively on the outer plate (3).

2. Device according to claim 1, characterised in that the inner and outer plates (1, 3) are soldered onto the metal-felt-layer (2).

3. Device according to claim 1 or 2, characterised in that the inner plate (1) is secured on the housing wall (4) by soldering, welding, screwing, riveting or the like.

4. Device according to one of claims 1 to 3, characterised in that the inner and outer plate (1, 3), the insulating body (2) and the construction part (5) are arranged with spacings (A, B, C) for the thermal insulation (6) of the housing wall (4).

5. Device according to one of claims 1 to 4, characterised in that the outer plate (3) forms a construction part support curved at least at one end laterally opposite the housing wall (4).

6. Device according to one of claims 1 to 5, characterised in that the outer plate is equipped with several lateral curves or laterally projecting carriers.

7. Device according to one or more than one of claims 1 to 6, characterised in that the housing wall (4) is a wall conveying hot gas (G) over the matrix (12) of a cross-counter-flow heat exchanger, and in that the construction part (5) is the carrier of bristles of a movement-compensatory brush seal (16) in the flow duct (21), between the thermally insulated housing wall (4) and a dish (14) covering the matrix (12) in the U-shaped deflection area.

## Revendications

1. Dispositif de support d'isolation thermique pour une pièce de construction (5) sur une paroi de carter (4) d'un canal d'écoulement (21) en forme de passage de gaz chauds, comportant des plaques métalliques (1, 3) intérieure et extérieure, entre lesquelles est placé un organe isolant (2) en un matériau élastique, dispositif caractérisé en ce que :

l'organe isolant (2) est une couche de feutre-métal ;

l'organe isolant (2) remplit une cavité réalisée dans une isolation thermique (6) de la paroi de carter (4) ;

la plaque intérieure (1) est fixée directement sur la paroi de carter (4) et la pièce (5) est fixée exclusivement sur la plaque extérieure (3).

2. Dispositif selon la revendication 1, caractérisé en ce que la plaque intérieure et la plaque extérieure (1, 3) sont brasées sur la couche de feutre-métal (2).

3. Dispositif selon la revendication 1 ou 2, caractérisé en ce que la plaque intérieure (1) est fixée par brasage, soudage, vissage, rivetage ou analogue sur la paroi de carter (4).

4. Dispositif selon l'une des revendications 1 à 3, caractérisé en ce que la plaque intérieure et la plaque extérieure (1, 3) de l'organe isolant (2) et la pièce (5) sont prévues à des intervalles (A, B, C) de l'isolation thermique (6) de la paroi de carter (4).

5. Dispositif selon l'une des revendications 1 à 4, caractérisé en ce que la plaque extérieure (3) forme un support de pièces de construction, courbée sur au moins une extrémité, latéralement par rapport à la paroi de carter (4).

6. Dispositif selon l'une des revendications 1 à 5, caractérisé en ce que la plaque extérieure est munie de plusieurs parties latérales courbées ou de tôles de support latéralement en saillie.

7. Dispositif une ou plusieurs des revendications 1 à 6, caractérisé en ce que la paroi extérieure (4) est la paroi d'un échangeur de chaleur à contre-courants croisés et guidant un gaz chaud (G) par une matrice (12) et en ce que la pièce (5) est le support des balais d'un joint d'étanchéité à balais (16) à compensation de mouvement dans le canal d'écoulement (21) entre la paroi de carter (4) isolée thermiquement et une coquille (14) de recouvrement entourant la zone de renvoi en forme de U de la matrice (12).

FIG.1

FIG. 2

1

FIG. 3

EP 0 199 319 B1